# EUROPEAN PATENT APPLICATION

(11) **EP 4 644 856 A1**
(43) Date of publication of application: **05.11.2025**
(21) Application number: 24173496.1
(22) Date of filing: 30.04.2024
(51) Int. Cl.: G01L 9/06, G01L 27/00

(54) **PRESSURE SENSOR FOR COMPENSATING TEMPERATURE DEPENDENCIES AND A METHOD FOR COMPENSATING TEMPERATURE DEPENDENCIES**

(71) Applicant: TE Connectivity Solutions GmbH, 8200 Schaffhausen (CH)
(72) Inventor: Jenni, Kaspar, 8200 Schaffhausen (CH); Boisot, Gilles, 8200 Schaffhausen (CH); Poenaru, Ilie, 8200 Schaffhausen (CH); Chevallaz, Eric, 8200 Schaffhausen (CH)
(74) Representative: Grünecker Patent- und Rechtsanwälte PartG mbB

(57) **Abstract**

Herein is discussed a method carried out by a processor (300) for compensating temperature dependencies of a piezo resistive element (122) integrated in a pressure sensor (10), the method comprising the steps of: receiving, from the temperature circuitry (140), a first temperature signal for determining a first temperature (T1) of the pressure circuitry (120); receiving, from the sensor die (100), a first output signal for determining a first resistive value (R1_{T=T1}) of the piezo resistive element at the first temperature (T1); transmitting, to the built-in heating element (160), after receiving the first output signal, a heating signal for heating the pressure circuitry (120) to a second temperature (T2); receiving, from the sensor die (100) after termination of the heating, a second output signal for determining a second resistive value (R1_{T=T2} of the piezo resistive element (120) at the second temperature (T2); and storing, in the memory (200), an updated TC for the piezo resistive element (122) calculated based on the first temperature (T1), the first resistive value (R1_{T=T1}), the second temperature (T2), and the second resistive value (R1_{T=T2}).

## Description

The invention relates to a pressure sensor for compensating temperature dependencies and a method for compensating temperature dependencies.

A pressure sensor is a device for measuring the pressure of media, i.e. gases, liquids, or solids. Pressure is an expression of the force required to stop a fluid from expanding and is usually expressed in terms of force per unit area. A pressure sensor typically acts as a transducer; it generates a signal as a function of the pressure applied. In case of connecting to solids, a pressure sensor is typically referred to as a force sensor.

A pressure sensor can measure the difference between two pressures, one applied to each side of the sensor, i.e. an upper side and an opposite lower side of the pressure sensor. More specifically, pressure sensors measure a pressure difference between two measurement points (e.g. P1 and P2) of a fluid. For example, P1 is a reference vacuum and P2 is the external pressure to be sensed.

A pressure sensor can use a piezo resistive element, also called a piezo resistive gauge. The pressure creates stress in the material, and thus, when pressure is applied to the pressure sensitive element, its resistance changes due to the stress, and thus, a change in voltage can be measured.

The output signal from the pressure sensor, and especially in the case of a pressure sensor that consists of resistors forming a Wheatstone bridge, must be calibrated to provide an accurate measurement of the applied pressure. This calibration involves relating the voltage difference to the pressure using known calibration factors, such as external parameters, e.g. temperature, humidity, and pressure, and/or internal parameters, such as a resistance of the resistive element, and resistance of the wiring.

However, calibration is expensive and time-consuming. In addition, calibration can become inaccurate over time. In particular, pressure sensors have a long dwell time after reflow soldering, making calibration inaccurate and expensive. Also, a pressure sensor exposed to the environment is not completely stable over time, so drift is common. In addition, when pressure sensors are used in harsh environments, there are many sources of damage, and it is necessary to detect a malfunction early to prevent damage to the application in which the sensor is used. Currently, diagnostic and self-compensating methods require additional components or external equipment.

In view of the above, an object of the present invention is to improve the calibration of the sensor. A further object is to reduce the parts required for calibration. In particular, it is an object to reduce time and costs relating to the calibration.

At least one of the objects discussed above is solved by the independent claims. Advantageous embodiments are solved by the dependent claims. Examples mentioned in the following description that are not necessarily following under the scope of the independent claims are useful for understanding the invention.

In general, herein is discussed that a set of temperature coefficients for the piezo resistive stored in the memory of the sensor is newly calculated, i.e. updated in system, by heating the piezo-resistor with a built-in heating element. This enables to improve the calibration.

A first example relates to a pressure sensor for compensating temperature dependencies of a piezo resistive element. The pressure sensor comprises a sensor die connected to a processor, the sensor die is adapted to receive an input signal from the processor and to output an output signal to the processor. The sensor die comprises a pressure circuitry comprising the piezo resistive element, wherein the pressure circuitry is adapted to measure a pressure applied to the sensor die and to output a pressure signal indicative of the applied pressure. Further the sensor die comprises a temperature circuitry integrated with the pressure circuitry adapted to measure a temperature of the piezo resistive element and to output a temperature signal indicative of the temperature of the piezo resistive element. Further, the sensor die comprises a built-in heating element integrated with the pressure circuitry adapted to heat the piezo resistive element based on a received heating signal. Further, the pressure sensor comprises a memory storing a TC, e.g. a set of temperature coefficients, (TC) for compensating temperature effects of the piezo resistive element and a program, when executed by the processor, causes the processor to perform the steps of:
receiving, from the temperature circuitry, a first temperature signal for determining a first temperature of the pressure circuitry;
receiving, from the sensor die, a first output signal for determining a first resistive value of the piezo resistive element at the first temperature;
transmitting, to the built-in heating element, after receiving the first output signal, a heating signal for heating the pressure circuitry to a second temperature;
receiving, from the sensor die after termination of the heating, a second output signal for determining a second resistive value of the piezo resistive element at the second temperature; and
storing, in the memory, an updated TC, e.g. the set of TCs, for the piezo resistive element calculated based on the first temperature, the first resistive value, the second temperature, and the second resistive value.

The output signal of the sensor die may be any output, in particular voltage values such as the differential between voltages, e.g. the difference between the bridge voltages V2 and V3 explained later. Additionally, the output signal of the sensor die may be a temperature signal. In particular, the first and/or second output signal is for example a voltage output caused by the change in resistance. Thus, based on the output value a resistance can be calculated.

The memory can store the compensation in temperature for the pressure signal. In more detail, the TC, e.g. the set of TCs, may include storing a temperature coefficient of a span and an offset. In other words, the TC (e.g. the set of TCs) is a stored set of coefficients used to produce a compensated output or, phrased differently, stored coefficients for compensating the offset.

Receiving an output signal from the sensor die prior and after heating the piezo resistive element with a built-in heating element enables an in-system update of the temperature coefficient.

A second aspect relates to the pressure sensor according to aspect 1, wherein the second temperature is determined based on at least one of the heating signals and a second temperature signal received from the temperature circuitry.

For example, if models are available, the second temperature measurement can be skipped. Measuring the second temperature reduces errors.

The second temperature can be determined based on various measurements, which enables for further cross-checks.

A third aspect relates to the pressure sensor according to any of the preceding aspects, wherein the built-in heating element comprises a resistive network integrated with the piezo resistive element on the silicon die.

A resistive built-in heating element enables a cost-efficient fabrication as it may be integrated on the silicon at the same time as the piezo resistive element.

A fourth aspect relates to the pressure sensor according to aspect 3, wherein the resistive network comprises the piezo resistive element of the pressure circuitry.

Reusing the piezo resistive element as the built-in heater enables to reduce costs and to increase accuracy.

A fifth aspect relates to the pressure sensor according to aspect 4, wherein the pressure circuitry comprises a resistive bridge with four resistors and the same four resistors are connected in the resistive network in parallel to form the built-in heating element.

A plurality of four resistive elements, in particular four piezo resistive elements, enables to increase the heating efficiency.

A sixth aspect relates to the pressure sensor according to any of the preceding aspects, wherein the built-in heating element comprises an inductive heating coil integrated with the piezo resistive element on the silicon die.

An additional wireless heating element enables to increase the heating efficiency.

According to an option of the sixth aspect, the pressure sensor comprises a principal heating coil for coupling to the inductive heating coil, wherein the principal coil is integrated on a mounting platform for mounting the pressure sensor.

According to an option of any of the above aspects, a mounting platform is formed by at least one of a printed circuit board and a ceramic substrate.

According to an option of the sixth aspect, at least one of the memory and the processor are mounted on a mounting platform.

A seventh aspect relates to the pressure sensor according to any of the preceding aspects, wherein the temperature circuitry comprises the piezo resistive element of the pressure circuitry and the temperature of the pressure circuitry is determined based on a measured resistance across the piezo resistive element and the stored TC.

Reusing the piezo resistive element as the temperature circuitry enables to reduce costs and to increase accuracy.

An eight aspect relates to the pressure sensor according to aspect 7, wherein the pressure circuitry comprises a resistive bridge with four piezo resistive elements and the temperature of the pressure circuitry is determined based on a measured resistance across the resistive bridge and the stored TC.

A plurality of four resistive elements, in particular four piezo resistive elements, enables to increase the accuracy.

A ninth aspect relates to the pressure sensor according to any of aspects 7 and 8, wherein the program further causes the processor to perform the steps of:
receiving, from the temperature circuitry after termination of the heating, an initial temperature signal;
receiving, from the temperature circuitry after receiving the initial temperature signal, a subsequent temperature signal; and
determining, based on the initial temperature signal and the subsequent temperature signal, the second temperature.

Notably, the subsequent temperature signal may be received after the second output signal for interpolating the temperature. Alternatively, the subsequent temperature signal may be received before the second output signal for extrapolating the temperature. Alternatively, the initial temperature signal may be received after the second output signal for extrapolating the temperature.

Measuring the temperature twice enables to increase the accuracy.

A tenth aspect relates to the pressure sensor according to any of the preceding aspects, wherein the temperature circuitry comprises a temperature sensor diode and/or a bipolar junction transistor for outputting the temperature signal.

An additional temperature diode enables to increase the accuracy and allows for cross checks.

An eleventh aspect relates to the pressure sensor according to any of the preceding aspects, wherein the sensor die further comprises a second pressure circuitry comprising a second piezo resistive element, the second pressure circuitry adapted to measure a second pressure applied to the sensor die and to output a second pressure signal indicative of the applied second pressure.

An additional pressure circuit enables to calibrate further sensor parameter, e.g. a drift in pressure and common mode effects. In particular, it can be assumed that the second pressure circuitry has a similar or the same behavior in temperature as the first bridge.

A twelfth aspect relates to the pressure sensor according to aspect 11, wherein the built-in heating element comprises a resistive network integrated with the second piezo resistive element on the silicon die, preferably wherein the resistive network comprises the second piezo resistive element of the second pressure circuitry, preferably wherein four resistors of a second resistive bridge forming the second pressure circuitry are connected in parallel to form the built-in heating.

A resistive built-in heating element enables a cost-efficient fabrication as it may be integrated on the silicon at the same time as the piezo resistive element. A plurality of four resistive elements, in particular four piezo resistive elements, enables to increase the heating efficiency.

A thirteenth aspect relates to the pressure sensor according to any of the preceding aspects, wherein the pressure circuitry comprises a Wheatstone bridge, wherein a first resistance value of a first pair of opposing arms of the Wheatstone bridge increases with pressure and a second resistance value of a second pair of opposing arms of the Wheatstone bridge is inverted relative to the first resistance value.

Such a circuit configuration of the pressure sensor enables accurate pressure measurements.

A fourteenth aspect relates to the pressure sensor according to aspect 13 further comprising a switch, wherein the switch is configured to switch between a pressure sensing mode where abutting arms of the Wheatstone bridge are excited with the same voltage and a diagnosis mode where abutting arms are excited with inverted voltage values.

For example, a first voltage value has a first amount, e.g. Ex+, and the second voltage value, i.e. the inverted voltage value, has the same first amount with opposing sign, e.g. Ex-. According to a second example, the second voltage value, i.e. the inverted voltage value, has the different second amount, e.g. being ground. Such a circuit configuration enables to detect errors of the pressure sensor, which may be vary due to external or internal effects.

A fifteenth aspect relates to a method carried out by a processor for compensating temperature dependencies of a piezo resistive element integrated in a pressure sensor, for example according to any of the preceding aspects, the method comprising the steps of
receiving, from the temperature circuitry, a first temperature signal for determining a first temperature (T1) of the pressure circuitry;
receiving, from the sensor die, a first output signal for determining a first resistive value (R1_{T=T1}) of the piezo resistive element at the first temperature (T1);
transmitting, to the built-in heating element, after receiving the first output signal, a heating signal for heating the pressure circuitry to a second temperature (T2);
receiving, from the sensor die after termination of the heating, a second output signal for determining a second resistive value (R1_{T=T2}) of the piezo resistive element at the second temperature (T2); and
storing, in the memory, an updated TC for the piezo resistive element calculated based on the first temperature (T1), the first resistive value (R1_{T=T1}), the second temperature (T2), and the second resistive value (R1_{T=T2}).

The fifteenth aspect enable the same aspects as aspects one to fourteen.

The invention will now be described in greater detail and in an exemplary manner using advantageous embodiments and with reference to the drawings. The described embodiments are only possible configurations in which, however, the individual features as described above can be provided independently of one another or can be omitted.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. The described embodiments are merely possible configurations and it must be borne in mind that the individual features as described above can be provided independently of one another or can be omitted altogether while implementing this invention. Further features and advantages will become apparent from the following more particular description of the various embodiments of the invention, as illustrated in the accompanying drawings, in which like references refer to like elements, and wherein:
- **FIG. 1**: is a schematic of a pressure sensor arrangement according to an example;
- **FIG. 2**: is a schematic cross section of an absolute pressure die;
- **FIG. 3**: is a top view of Fig. 2;
- **FIG. 4**: is a schematic arrangement of resistors of the sensor of Fig. 2;
- **FIG. 5**: is a circuit diagram of the sensor of Fig. 2 to measure pressure;
- **FIG. 6**: is a flow diagram to operate the pressure sensor according to one example;
- **FIG. 7**: is a flow diagram to measure pressure according to one example;
- **FIG. 8**: is a schematic of resistance dependent temperature;
- **FIG. 9**: is a circuit diagram to sense with the sensor of Fig. 2 a temperature;
- **FIG. 10**: is a simplified illustration of the circuit diagram of Fig. 9;
- **FIG. 11**: is a flow diagram to measure temperature according to one example;
- **FIG. 12**: is a circuit diagram to heat with the sensor of Fig. 2;
- **FIG. 13**: is a flow diagram to heat according to one example;
- **FIG. 14**: is a flow diagram to compensate the temperature coefficient according to one example;
- **FIG. 15**: is a circuit diagram to detect errors of the sensor of Fig. 2;
- **FIG. 16**: is a simplified illustration of the circuit diagram of Fig. 15;
- **FIG. 17**: is a flow diagram to detect an error in the sensor according to one example; and
- **FIG. 18**: is a circuit diagram with two circuitries to measure pressure.

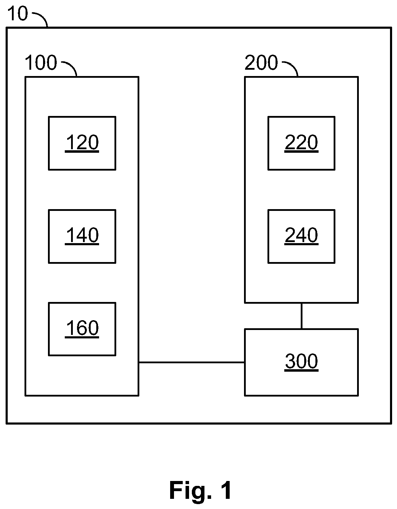

The present invention will now be explained with reference to the Figures, starting with Fig. 1. Fig. 1 shows a pressure sensor 10. The pressure sensor 10 comprises a sensor die 100, a memory 200, and a processor 300.

As used herein, the sensor die 100 refers to the actual sensing component of the pressure sensor, which is typically semiconductor-based, that detects and measures physical properties such as pressure and temperature. The term "die" is derived from the semiconductor manufacturing process in which a silicon wafer is divided into individual chips called "dies". Each die contains the circuitries necessary for the sensor to perform its functions.

The sensor die 100 may be made of silicon, although other materials such as gallium arsenide or indium phosphide may be used depending on the application. The part of the sensor chip that interacts with the physical phenomenon being measured is referred to as the sensing element. As shown further in Fig.1, the sensor die 100 comprises a pressure circuitry 120 and a temperature circuitry 140. Further, in the sensor die 100 is integrated a built-in heating element 160.

The sensor further comprises a memory 200 comprising a compensation value storage unit 220 for storing values such as a temperature coefficient (TC) and a program storage unit 240 for storing programs to be executed by the processor 300, which will be describe later.

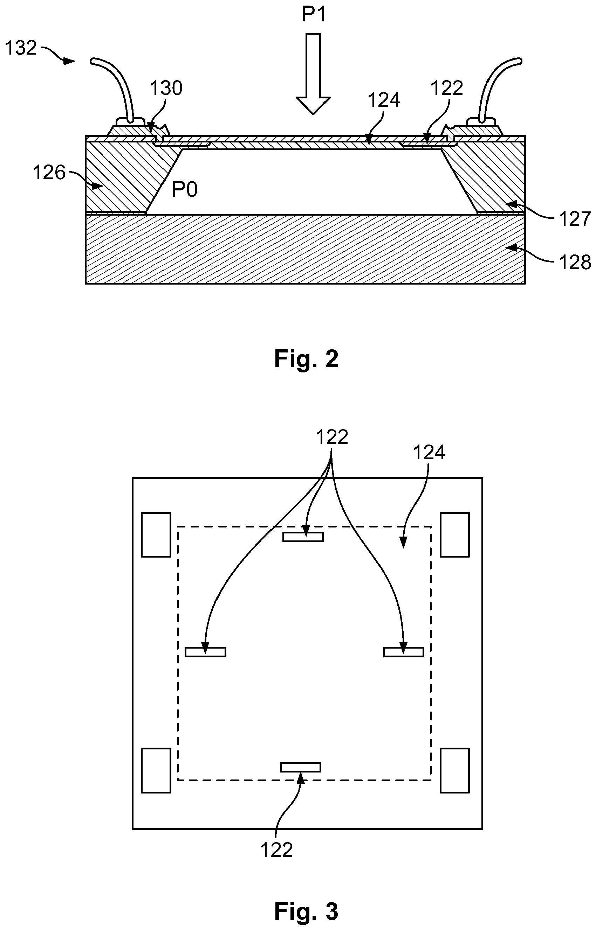

Figs. 2 and 3 illustrate as an example for a sensor die with a pressure circuitry. In particular, the pressure circuitry comprises four piezo resistive elements 122 whose resistance changes with stress applied to the sensing element, which usually is referred to as a diaphragm 124. Notably, in Figs. 2 and 3 an example with four piezo resistive elements is shown. Alternatively, the pressure circuitry may only comprise one piezo resistive element or even more than four piezo resistive elements. In particular, the pressure circuitry may comprise two piezo resistive elements.

Fig. 2 also shows that the sensor die includes a sealed chamber at reference pressure P0. The chamber is formed by recessing a silicon wafer such that the chamber is surrounded by silicon wafer wall 126 and closed by a backside glass wafer 128, which is connected to the silicon wafer wall 126 by a wafer sealing 127. Thus, when the pressure P1 changes relative to the reference pressure P0, such as a vacuum pressure, the diaphragm 124 is deflected and the resistance of the piezo resistive elements 122 changes. Based on this change, the absolute pressure P1 can be determined. In particular, Figs. 2 and 3 show an example of an absolute pressure sensor. Alternatively, the pressure sensor can be implemented as a differential pressure sensor.

As used herein, a piezo resistive element is a type of sensor component that changes its electrical resistance in response to mechanical stress or pressure. The term "piezo resistive" is derived from "piezo," meaning pressure or stress, and "resistive," referring to resistance.

Piezo resistive elements are typically made from semiconductor materials such as silicon or germanium. These materials exhibit the piezo resistive effect, meaning that their electrical resistance changes when subjected to mechanical stress.

For example, as shown in Fig. 3, the multiple piezo resistive elements are often combined, for example in a Wheatstone bridge configuration to increase sensitivity and accuracy.

As shown in Fig. 2, the sensor die comprises further metal pads 130 or leads for connecting it to a circuitry external to the sensor die, which is herein referred to as a processor, such as a microcontroller, an analog-to-digital converter (ADC), and Application-Specific Integrated Circuit (ASIC). These connections allow the sensor die to transmit its measurements to other parts of a larger electronic system.

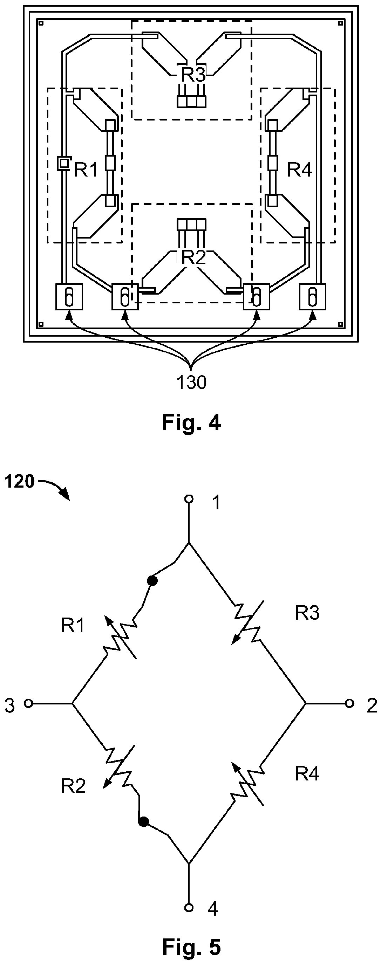

Figs. 4 and 5 show the example of a Wheatstone bridge configuration in more detail. The Wheatstone bridge comprises four resistive elements R1, R2, R3 and R4 arranged in a diamond pattern. The Wheatstone bridge has two terminals 1 and 4 for applying an external voltage as an input signal. For example, in a pressure sensing mode, at an input terminal 1 a first external voltage Ex+ and at input terminal 4 a second external voltage Ex- may be applied, where Ex+ has the same magnitude as Ex- but opposite sign or where Ex+ is a positive supply voltage and Ex-is ground. In addition, the Wheatstone bridge has, in the pressure sensing mode, two output terminals 2 and 3 for outputting a pressure signal indicative of the applied pressure, i.e. the output voltages V2 and V3 abbreviated in the Fig. 5 by reference numerals 2 and 3.

When pressure is applied to the four piezo resistive elements R1 to R4, the resistance changes, resulting in an imbalance in the bridge circuit. This imbalance can be measured as a voltage output that is proportional to the applied pressure, i.e. the applied stress.

Here, the Wheatstone bridge with has four variable resistors. This enables to measure changes in pressure accurately. This setup allows for precise detection and measurement of pressure variations by leveraging the principle of a balanced bridge circuit. According to a not shown example, the pressure sensor may comprise only one piezo resistive element.

As shown in Figs. 4 and 5, the four piezo resistive elements R1 to R4 are positioned so that as the resistance of R1 and R3 increases, the resistance of R2 and R4 decrease, which is indicated by the opposite direction of the arrows. The arrows correspond to change of resistance when pressure is applied. They may be understood relative to each other, R1 and R4 have a change of resistance of similar, in particular same, sign and magnitude, when R2 and R3 have a change of opposite sign but similar, in particular same, magnitude.

As shown in Fig. 5, in a pressure sensing mode of the pressure circuitry 120, the resistors are connected such that a first resistance value of a first pair of opposing arms of the Wheatstone bridge increases with pressure and a second resistance value of a second pair of opposing arms of the Wheatstone bridge is inverted relative to the first resistance value.

In the absence of pressure, i.e. P1=P0, the Wheatstone bridge is balanced, meaning that the voltage difference at the output terminals 2 and 3 between the two arms of the bridge is zero. This balance is achieved, for example, by initially adjusting the resistances of the resistive elements. For example, the change in amount of resistance by stress on all four resistors R1 to R4 is the same by design. When the bridge is balanced, in the pressure sensing mode, no current flows through the output terminals 2 and 3, and the voltage across the bridge is zero.

When pressure is applied to the sensor die, the piezo resistive elements R1 to R4 experience deformation, causing their resistances to change. This alters the balance of the Wheatstone bridge, resulting in a voltage difference across the output terminals 2 and 3.

The voltage difference across the output terminals 2 and 3 of the Wheatstone bridge is proportional to the applied pressure. This voltage difference can be measured using a voltmeter or the output terminals 2 and 3 can be connected to an amplifier for further processing. By calibrating the sensor's response to known pressure values, precise pressure measurements can be obtained.

Pressure sensors based on Wheatstone bridge configurations with four variable resistors enable high sensitivity, accuracy, and reliability, making them suitable for demanding measurement tasks.

In summary, as shown in Fig. 1, the sensor die 100 is connected to a processor 300. Thus, the sensor is adapted to receive an input signal from the processor 300 and to output an output signal to the processor 300. In particular, the pressure circuitry 120 comprises the piezo resistive element 122. As for example explained with Figs. 2 and 3, the pressure circuitry 120 is adapted to measure a pressure P1 applied to the sensor die 100, in particular to the diaphragm 124, and to output a pressure signal indicative of the applied pressure.

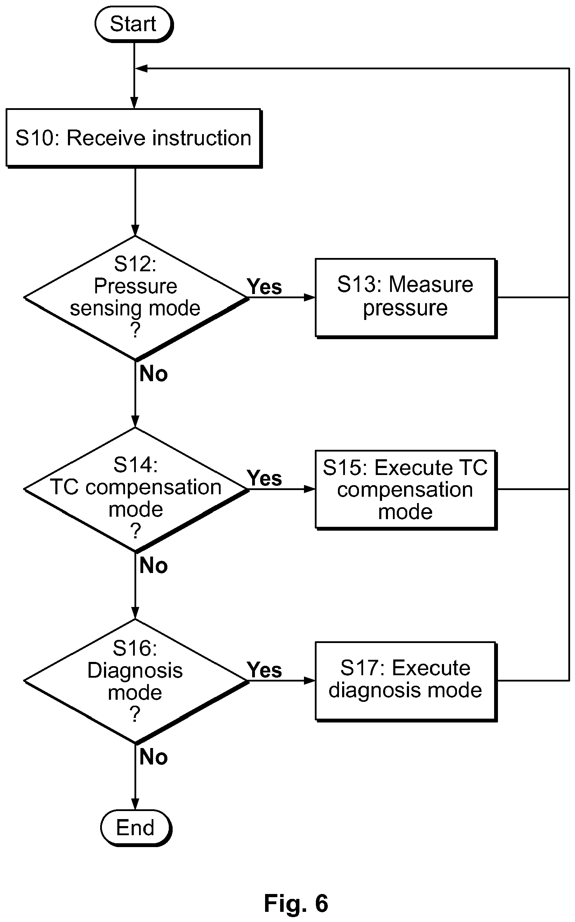

In order for the processor 300 of the pressure sensor 10 to receive a pressure signal from the sensor die 100, the processor 300 may receive an instruction S10 indicating that the pressure sensor is in the pressure sensing mode (Yes:S12), as shown for example in FIG. 6. The instruction may be, for example, a predefined instruction stored in the memory 200 or the processor may comprise an input terminal for receiving the instruction.

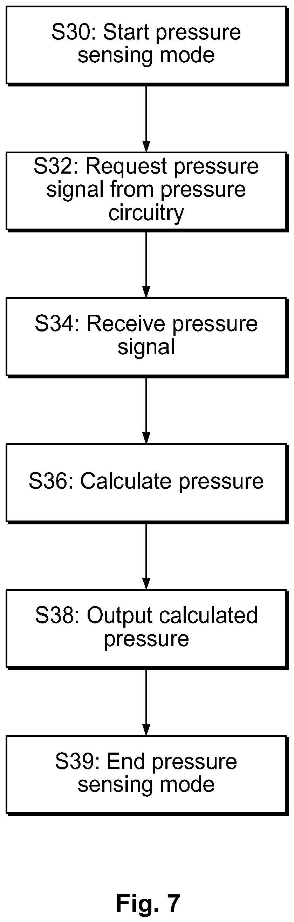

In the case that the pressure sensor 10 is in the pressure sensing mode, the processor 300 may start with step S13 of measuring a pressure. For example, the processor 300 can execute the instructions discussed in the flowchart shown in FIG. 7. The instructions may be stored, for example, in the program storage unit 240.

The process begins at step S30. The instructions include, at step S32, requesting a pressure signal from the pressure circuitry 120. This request may include, for example, connecting the piezo resistive element 122 or the bridge circuit as discussed with reference to Figs. 4 and 5. In particular, the request may include supplying the input voltage to the sensor die 100. The processor 300 may then perform the step S34 of receiving a pressure signal as an output signal from the pressure circuitry 120. For example, the pressure signal may be a voltage signal as discussed above with reference to Figs. 4 and 5. Alternatively, the processor may measure the resistance of the piezo resistive element 122, for example, based on a measured current and/or a measured voltage.

Then, in step S36, the processor 300 may calculate the pressure P1 based on the received pressure signal, for example, by using compensation values stored in the compensation value storage unit 220. Then, in step S38, the process 300 may output the calculated pressure. Alternatively, the processor may output the received pressure signal without compensation. The process ends with step S39.

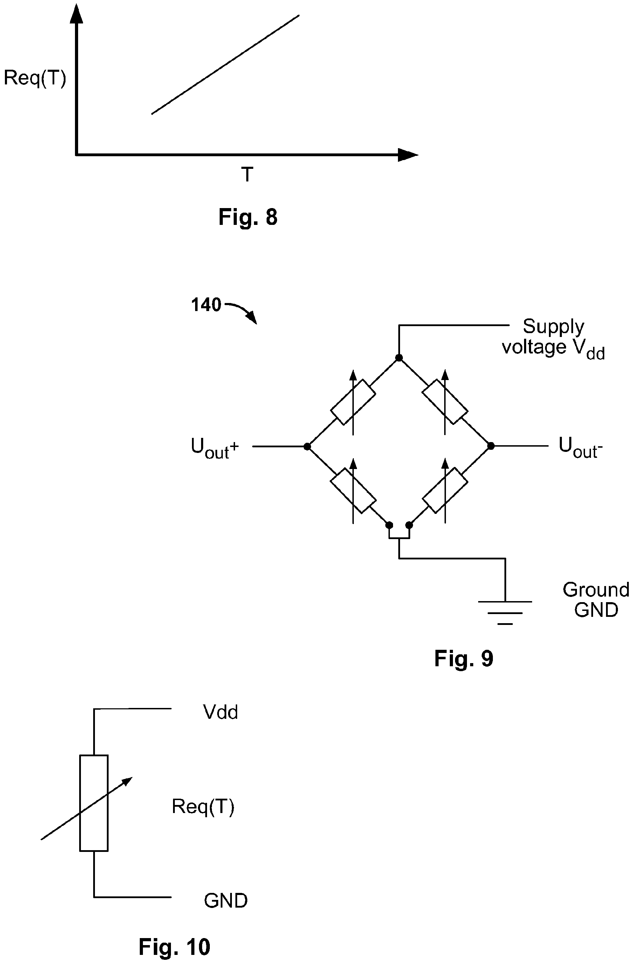

As discussed in "Kanda, Y. (1991) 'Piezoresistance effect of Silicon', Sensors and Actuators A: Physical, 28(2), pp. 83-91*"*, the resistance of the piezo resistive element 122 can be highly dependent on temperature. For example, as shown in the simplified diagram in Fig. 8, the resistance value Req (T) of the piezo resistive element 122 can increase with temperature T.

As discussed above with Fig. 1, the sensor die 100 comprises the temperature circuitry 140 integrated with the pressure circuitry 120. The temperature circuitry 140 is adapted to measure a temperature of the piezo resistive element 122 and to output a temperature signal indicative of the temperature of the piezo resistive element.

For example, in step S36 of Fig. 7, the processor 300 may calculate the pressure based on the received pressure signal, a received temperature signal, and a set of temperature coefficient (TC) for compensating temperature effects of the piezo resistive element 122. Notably, the temperature signal can be outputted in step S38 with the calculated pressure for compensation by an external entity.

The TC of the piezo resistive element refers to how the resistance of the element changes with variations in temperature. It quantifies the sensitivity of the piezo resistive material to temperature changes. Understanding the TC of a piezo resistive element enables calibrating and compensating for temperature effects in the sensor. Compensation techniques, such as using temperature circuitries and/or incorporating temperature coefficients into the sensor's signal processing algorithms, enables to maintain the accuracy and reliability of measurements over a wide range of operating temperatures.

The temperature circuitry can comprise a temperature sensor diode for outputting the temperature signal.

Additionally or alternatively, the temperature circuitry 140 can comprise the piezo resistive element 122 of the pressure circuitry 120 and the temperature of the pressure circuitry 120 is determined based on a measured resistance Req(T) across the piezo resistive element 122 and the stored TC.

Under the condition of a constant pressure, the temperature of the piezo resistive element can be determined based on a resistance measurement and a relation as for example shown in Fig. 8.

Advantageously, the pressure circuitry 120 comprises the above with reference to Figs. 4 and 5 discussed resistive bridge with four piezo resistive elements and the temperature of the pressure circuitry is determined based on a measured resistance Req(T) across the resistive bridge and the stored TC.

For example, as shown in Fig. 9, in a temperature sensing mode, input terminal 1 of the pressure circuitry forming the temperature circuity 140 is supplied with a first external voltage Vdd and input terminal 4 may be connected to ground. In other words, a switch is made between at the input terminals 1 and 4 when operating the pressure circuitry in the temperature mode or in the pressure sensing mode. The switch can be made, for example by the processor 300 such as an ASIC, to change input voltage at terminal 4 from Ex- to ground. The arrow represents a change in temperature. For example, in Fig. 9 all resistors have the same behavior with temperature.

It can be simplified that that R1(T,P=Pref)=R2(T,P=Pref)=R3(T, P=Pref)=R4(T, P=Pref)=Req(T) because all of the resistors R1, R2, R3, and R4 have the same TC of resistance by design, which can be defined by the concentration of the diffused species that form the resistors.

Further, it can be simplified that the condition R1(T,P)+R2(T,P) = R3(T,P)+R4(T,P) is satisfied because the bridge circuit is defined to be symmetrical.

Then, the resistance across the bridge simplifies to Req(T), which is independent of pressure, as shown in Fig. 10 because each side of the bridge is therefore equal to Req(T)+Req(T)=2*Req(T). Connecting the two sides of the bridge in parallel and calculate the equivalent resistance of the full Wheatstone bridge results to Rb(T)=1/(1/(2*Req(T))+1/(2*Req(T)))=Req(T). The arrow represents a change in resistance due to temperature, as for example explained in Fig 8.

Thus, under the above conditions, a change in pressure P does not cause a change in Req (T). However, a change in temperature T will. Knowing Req(T=Tref) at a reference temperature Tref and determining Req(T=T1) at a temperature T1 and using the stored TC value, which is for example stored in the compensation value storage unit 240, the temperature T1 can be calculated by the temperature circuitry 140 formed by the pressure circuitry 120, which is operated in the temperature sensing mode.

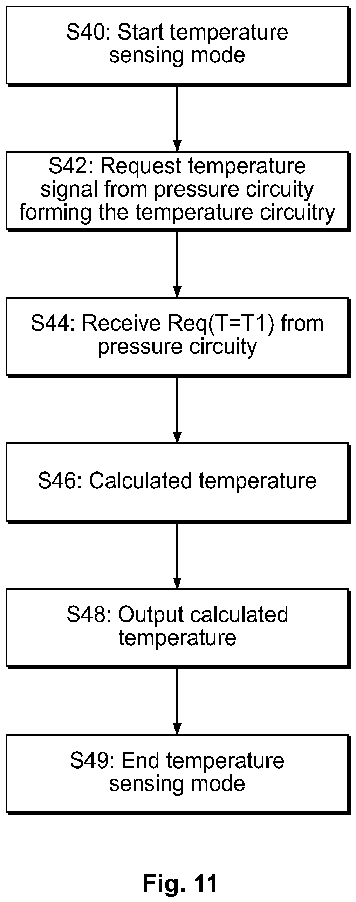

In other word, the pressure circuitry of the pressure sensor 10 can be operated in the temperature sensing mode and the processor 300 can start with measuring a temperature using the pressure circuitry 120. For example, the processor 300 may execute the instructions discussed in the flow diagram shown in Fig. 11. The instructions may be stored, for example, in the program storage unit 240.

The temperature sensing process begin with step S40. The instructions include, at step S42 requesting a temperature signal from the pressure circuitry 120 forming the temperature circuitry 140. This request may, for example, comprise connecting the piezo resistive elements 122 as discussed with Fig. 9. in particular, the request may include supplying the input voltage Vdd to the first terminal 1 and ground the opposing input terminal 4.

Then, the processor 300 may execute the step S44 of receiving, as an output signal from the pressure circuity 120, a temperature signal Req(T=T1). For example, the temperature signal may be a resistance across the bridge circuit, for example based on a measured current and/or a measured voltage.

Then, in step S46, the processor 300 may calculate the temperature based on the received temperature signal, which relates to Req(T=T1), by using TC values stored in the compensation value storage unit 220. Then, in step S48, the processor 300 may output the calculated temperature. Alternatively, the processor may output the received temperature signal without compensation using TC. The process ends with step S49.

This process discussed in Fig. 11 is typically performed by a processor such as an ASIC.

Using the resistors of the pressure circuitry 120 for the temperature circuitry 140 enables maximum accuracy because the temperature at the resistors directly affects the pressure output of the sensor die as measured by those resistors.

Using this method of temperature determination, it may be advantageous to take two temperature measurements, particularly before and after the pressure measurement, and interpolate or extrapolate between the two measurements, for example using a timer of the processor 300.

As discussed above with Fig. 1, the sensor die 100 comprises the built-in heating element 160 integrated with the pressure circuitry 120. The built-in heating element 160 is adapted to heat the piezo resistive element 120 based on a received heating signal. Thus, the temperature of the sensor die 100 can be increased by the processor and an in-system calibration is enabled.

For example, the built-in heating element 120 comprises a resistive network integrated with the piezo resistive element 122 on the silicon die. A current passing through the resistive network can heat the sensor die.

According to an example of a built-in heating device with the resistive network, the resistive network comprises the piezo resistive element 122 of the pressure circuitry 120. Using the piezo resistive element allows for local heating and thereby minimizing temperature gradients. As discussed with Figs. 8 to 11, the same resistor may be additionally used to measure the temperature and the pressure, which increases accuracy as temperature on the resistors directly affects the pressure output of the sensors as measured by this resistor.

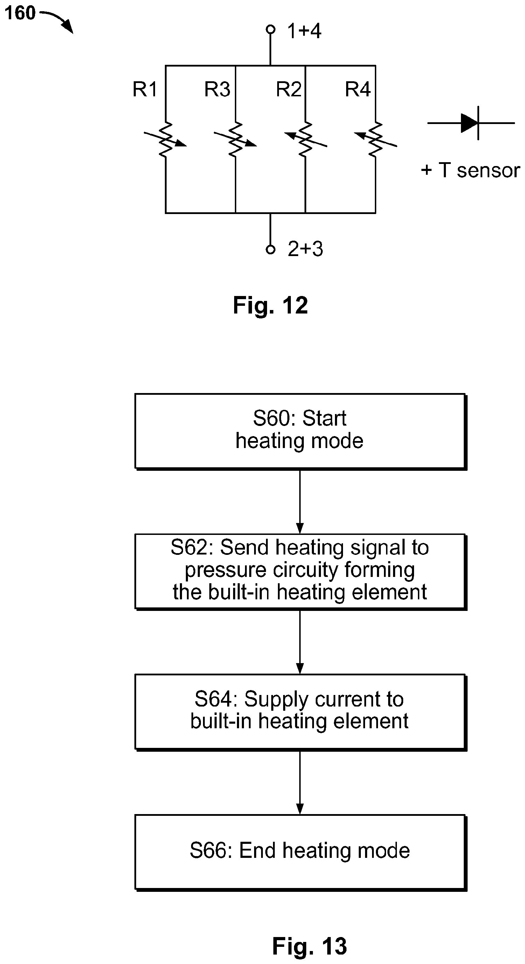

Advantageously, as discussed in Figs. 4 and 5, the pressure circuitry 120 comprises the resistive bridge with four resistors R1 to R4 and the same four resistors R1 to R4 are connected in the resistive network in parallel to form the built-in heating 160, as shown for example in Fig. 12. In addition to the above example with one piezo resistive element 122, the heating efficiency is thus increased.

For example, as shown in Fig. 12, in a heating mode, input terminals 1 and 4 of the pressure circuitry forming the build-in heater 160 are supplied with a first external voltage and the output terminals 2 and 3 are connected to ground. In other words, the input terminals 1 and 4 are short-circuited and the output terminals 2 and 3 are short-circuited when operating the pressure circuitry in the heating mode. Such a connection can be made, for example, by the processor 300 such as an ASIC. The arrows in Fig. 12 correspond to change of resistance when pressure is applied. The T sensor is represented as a temperature diode, which is optional.

As further shown in Fig. 12, the sensor die 100 may comprise in addition a temperature sensor, e.g. a temperature diode. This temperature diode is optional as the initial temperature before heating can be determined as described above in Figs. 8 to 11.

In the case that the pressure sensor 10 is in the heating mode, the processor 300 can start with heating. For example, the processor 300 may execute the instructions discussed in the flow diagram shown in Fig. 13. The instructions may be stored, for example, in program storage unit 240.

The process starts with step S60. The instructions include in step S62 sending a heating signal to the pressure circuitry 120 forming the build-in heater 160. This heating signal may for example comprise connecting the piezo resistive elements to enable heating, as discussed with Fig. 12. In particular, the signal may include supplying the input voltage to the first and fourth terminal and ground the output terminals 2 and 3.

Further, the processor 300 may execute the step S64 of suppling current to the at least one piezo resistive element. For example, a current is supplied in order to increase the temperature by typically 10°C. In particular, the current is supplied in order to increase the temperature by more than 5°C and/or less than 15°C. The process ends with step S64.

Thus, a second temperature after heating can be determined based on the heating signal, e.g. based on parameters such as current, voltage, resistance, and time. Additionally or alternatively, a second temperature signal can be received from the temperature circuitry to determine the second temperature.

This process discussed in Fig. 13 is commonly done by a processor such as an ASIC.

Alternatively or additionally, the built-in heating element comprises an inductive heating coil integrated with the piezo resistive element on the silicon die. This inductive coil can be coupled to a principal heating coil. The principal coil can be integrated on a mounting platform for mounting the pressure sensor. For example, the mounting platform is formed by at least by one of a printed circuit board and a ceramic substrate. Additionally, at least one of the memory and the processor are mounted on amounting platform.

Such a wireless heater can be used to heat the pressure sensor 10 in electrical wafer sort or after dicing into sensor dies. A wafer sort, also known as wafer testing or wafer probing, is a crucial step in the semiconductor manufacturing process. It involves testing individual circuitries while they are still on the wafer before they are separated or diced into sensor dies. During the wafer sort process, each circuitry on the wafer is electrically tested to ensure that it functions correctly and meets specified performance criteria. This testing typically involves applying various electrical signals to the circuitries input and output terminal using probes and measuring the circuitries response. The tests may include checking for functionality, performance, and other parameters such as power consumption.

In summary, as shown in Fig. 1, the sensor die 100, comprising the pressure circuitry, the temperature circuitry, and the built-in heating element, is connected to the processor 300, which can receive instructions from a program stored in the memory 200. Thus, the sensor enables compensating temperature dependencies of the piezo resistive element.

In order for the processor 300 of the pressure sensor 10 to compensate temperature dependencies, the processor 300 may receive an instruction S10 indicating that the pressure sensor is in a TC compensation mode (Yes:S14), as shown for example in FIG. 6. The instruction may be, for example, a predefined instruction stored in the memory 200 or may be received externally.

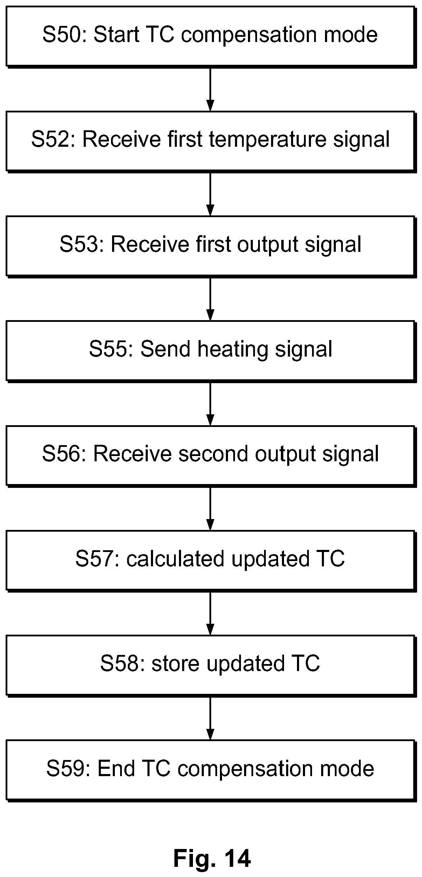

In the case that the pressure sensor 10 is in the TC compensation mode, the processor 300 may start with step 15 of executing the TC compensation mode. For example, the processor 300 can execute the instructions discussed in the flowchart shown in Fig. 14. The instructions may be stored, for example, in the program storage unit 240.

The process begins at step S50. The instructions include, at step S52, receiving, from the temperature circuitry 140, a first temperature signal for determining a first temperature T1 of the pressure circuitry 120. The first temperature may be determined as discussed above in Figs. 9 to 11 using the pressure circuitry 120 in the temperature mode and/or the first temperature may be received from the temperature diode.

Further, the instructions include, at step S53, receiving, from the sensor die, a first output signal for determining a first resistive value R1_{T=T1} of the piezo resistive element at the first temperature T1. The first output signal may be a voltage output of the pressure circuity 120 as discussed in above Figs. 4, 5, and 8 using the pressure circuitry 120 in the pressure sensing mode and/or the first output signal may be a measured resistance e.g. Req.

Steps S52 and S53 may be executed sequentially or simultaneously. Step S53 may be executed before step S52. The temperature T1 may be determined by inter- or extrapolation as discussed above.

Further, the instructions include, at step S55 transmitting, to the built-in heating element 160, after receiving the first output signal, a heating signal for heating the pressure circuitry 120 to a second temperature T2. The built-in heater 160 may heat the pressure circuitry as discussed above in Figs. 12 to 13 using the pressure circuitry 120 in the heating mode and/or the heating signal may heat another built in heater. As discussed above, based on the heating signal a second temperature may be determined.

Then, the instructions include, at step S56, receiving, from the sensor die 100 after termination of the heating, a second output signal for determining a second resistive value R1_{T=T2} of the piezo resistive element at the second temperature T2. The second output signal may be similar to the first output signal.

Then, the instructions include, at step S57, calculating an updated TC for the piezo resistive element. The updated TC for the piezo resistive element is calculated based on the first temperature T1, the first resistive value R1_{T=T1}, the second temperature T2, and the second resistive value R1_{T=T2}. For example, a TC relation as shown in Fig. 8 may be derived. This updated TC relation for the piezo resistive element is stored in the memory 200. The process ends with step S59.

Also not shown in Fig. 14, the process may include a step of receiving a second temperature signal. For example, the program can further cause the processor 300 to perform the steps of receiving, from the temperature circuitry 140 after termination of the heating, an initial temperature signal. In other words, this step may be executed after step S55 and before step S56. Then, the processor can receive, from the temperature circuitry 140 after the step S56 of receiving the temperature signal, a subsequent temperature signal. Based on the initial temperature signal and the subsequent temperature signal, the second temperature T2 can be determined.

As discussed above with reference to Fig. 5, in the pressure sensing mode of the pressure circuitry 120, the resistors are connected such that the first resistance value of the first pair of opposing arms of the Wheatstone bridge increases with pressure and the second resistance value of the second pair of opposing arms of the Wheatstone bridge is inverted relative to the first resistance value. Thus, it is possible to determined based on the voltage an output a pressure signal.

The pressure sensor of Fig. 5 can further comprise a switch. This switch is configured to switch between a pressure sensing mode where abutting arms of the Wheatstone bridge are excited with the same voltage to a diagnosis mode where abutting arms are excited with inverted voltage values.

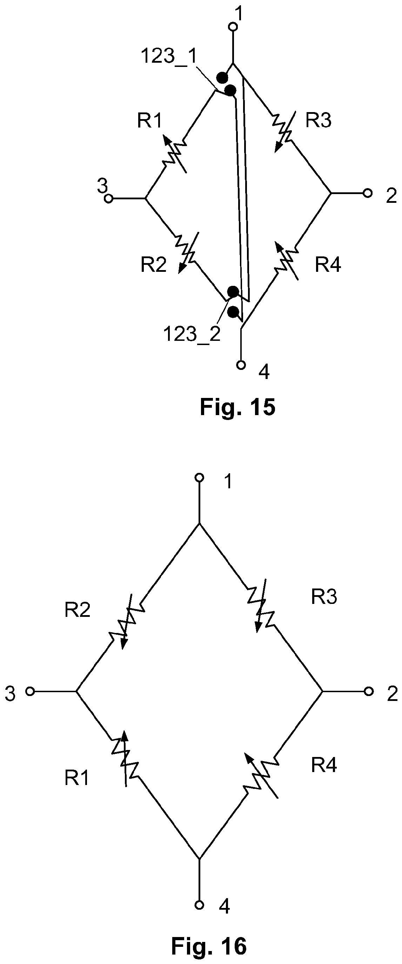

For example, as indicated in Fig. 15, switch 123_1 switches a connection of the input terminal of resistor R1 from input 1 to input 4 and switch 123_2 switches a connection of the input terminal of resistor R2 from input 4 to input 1. The resulting circuit diagram is shown in Fig. 16. As indicated by the arrows, when pressure changes, the voltage output at both outputs 2 and 3 changes by the same amount. In other words, in this configuration, referred to as diagnosis mode, the output voltage V2(P) at output terminal 2 should be equal to an output voltage V3(P) at output terminal 3 independent of the applied pressure.

As shown in Fig, 15, the switches can be part of the pressure circuitry, i.e. part of the MEMS. Alternatively or additionally, according to a not shown embodiment, switches can be part of the processor 300, e.g. an ASIC. Preferably, the processor 300 comprises the switches and pressure circuitry comprises additional pads.

In order for the processor 300 of the pressure sensor 10 to determining if the pressure circuitry 120 operates properly, the processor 300 may receive an instruction S10 indicating that the pressure sensor is in diagnosis mode (Yes:S16), as shown for example in FIG. 6. The instruction may be, for example, a predefined instruction stored in the memory 200 or may be received externally.

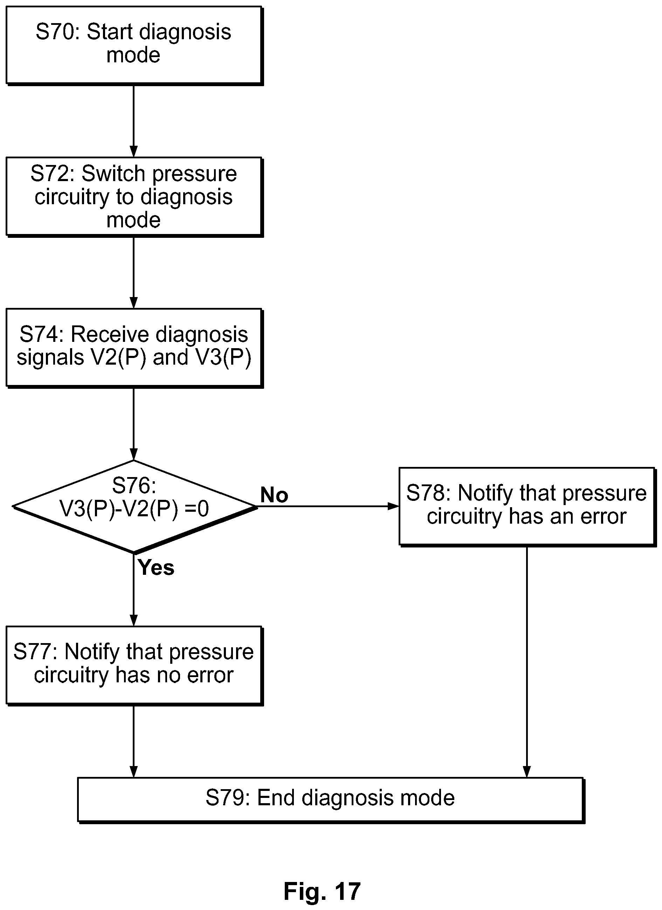

In the case that the pressure sensor 10 is in the diagnosis mode, the processor 300 may start with step S17 of executing the diagnosis mode. For example, the processor 300 can execute the instructions discussed in the flowchart shown in Fig. 17. The instructions may be stored, for example, in the program storage unit 240.

The process begins at step S70. The instructions include, at step S72, switching the pressure circuitry 120 to the diagnosis mode as for example explained with reference to Figs. 15 and 16. Then, at step S74, the processor 300 receives, from the pressure circuitry 120 in the diagnosis mode, V2(P) and V3(P). In step S76, the processor 300 compares V2(P) and V3(P). For example, the processor 300 determines if V2(P)-V3(P)=0. Alternatively, the processor 300 may determines if |V2(P)-V3(P)|< th, wherein th is a threshold value, which is for example stored in the memory 200.

If V2(P) is equal to V3(P), the processor may send a notification at step 77 that the pressure circuitry 120 is fully operational. Alternatively, if V2(P) is not equal to V3(P), at step 78, the processor may send a notification that the pressure circuitry 120 is not operating properly. The process terminates at step S79.

As described with reference to Fig. 6, the pressure sensor 10 can be operated in various modes. Fig. 6 is an example of how the pressure may be controlled to enter the different modes. Instead of receiving an instruction S10, the processor may enter any of the modes based on other conditions, such as at a predetermined pressure, at a predetermined temperature, after a predetermined time, or the like.

Further, according to an additional example, the sensor die may further comprise a second pressure circuitry comprising a second piezo resistive element, the second pressure circuitry adapted to measure a second pressure applied to the sensor die and to output a second pressure signal indicative of the applied second pressure. In particular, the built-in heating element may comprise a resistive network integrated with the second piezo resistive element on the silicon die.

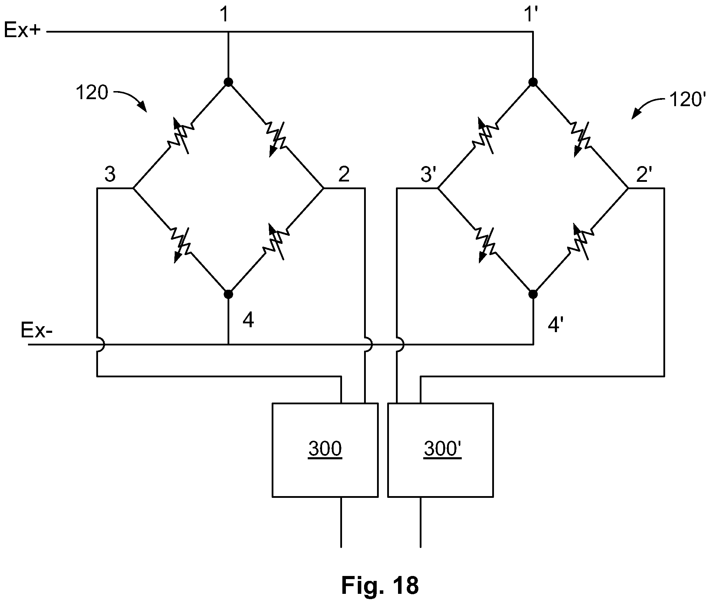

Further, Fig. 18 shows an example of a schematic circuit diagram of a pressure sensor system comprising a first pressure circuitry 120 and a second pressure circuitry 120'. In particular, the second pressure circuitry 120' can be a drift pressure sensor for determining a drift of the pressure sensor 120. As shown for example in Fig.18, the first pressure circuitry 120 and the second pressure circuitry 120' have an identical circuit configuration. In particular, the second pressure circuitry 120' can be operated in the same modes as discussed above for the first pressure circuitry 120. According to a not shown embodiment, the circuit configuration can be different.

Using a dual bridge solution would allow the use of 8 resistors in parallel, doubling the power output in the heating mode.

The second pressure circuitry 120' can differ from the first pressure circuitry that it may have a lower resistance. A secondary pressure circuitry 120' with a low resistance close to the pressure circuitry 120 can serve as a heater, allowing keeping a higher resistance value for the first pressure circuitry 120. A higher resistance reduces variations due to the process of manufacturing it. A lower resistance allows more heating. However controlling the manufacturing of such a lower resistance is more challenging. As resistance needs to be well controlled for the bridge to work well, a possible option is to use a predefined, e.g. standard, resistance for the pressure circuitry, and a modified resistance with a lower resistance than the predefined resistance for the second pressure circuitry. Notably, for the second pressure circuitry the control of the resistance is less important. Further, a higher resistance increases the signal as the ratio of piezo resistive resistance to non-sensitive resistance will increase.

Also not discussed in detail, the above sensor die is manufactured using semiconductor process technics.

In particular, silicon can be doped to create resistors or Temperature diodes. Dopants (or doping atoms) are purposely inserted in the silicon lattice, hence changing the features of the material in predefined areas: they are divided into "N" and "P" categories representing the negative and positive carriers they hold. Many different dopants are used to achieve these desired features: Phosphorous, Arsenic (N type) and Boron (P type) are the most frequently used ones.

There are two ways to dope the silicon. The first one is to insert the wafer into a furnace. Doping gases are then introduced which impregnate the silicon surface. This is one part of the manufacturing process called diffusion (the other part being the oxide growth). The second way to dope the silicon is called ionic implantation. In this case, doping atoms are introduced inside the silicon using an electron beam. Unlike diffusion, ionic implantation allows to put atoms at a given depth inside the silicon and basically allows a better control of all the main parameters during the process.

In diffusion, a step is used to introduce dopants inside the material or to grow a thin oxide layer onto the wafer. Wafers are inserted into a high temperature furnace (up to 1200 ° C) and doping gazes penetrate the silicon or react with it to grow a silicon oxide layer. This step also anneals the silicon after doping and activates the dopants.

Further, metal may be deposited on the silicon for manufacturing heaters, coils or T sensors. Two different methods are used to deposit the metal: evaporation or sputtering. It also allows the realization of electrical connections between the different cells of the integrated circuit and the outside. Metals include but are not limited to aluminum, copper, gold, platinum, etc.

This step of photo masking shapes the different components. Resist is put down on the wafer which is then exposed to light through a specific mask. This can expose or mask out parts of the surface. Depending on the type of resist, the part of the resin exposed to light softens and is rinsed off with solvents (developing step), or will become insoluble to the developer and the unexposed portion will be dissolved. This enables a precise positioning of the piezo resistive elements on the silicon wafer and the precise positioning of the silicon walls 126.

The chamber surrounded by the silicon walls 126 and other layers may be removed by etching operation. There are two different methods: wet (using a liquid or soluble compound) or dry (using a gaseous compound like oxygen or chlorine).

With the above techniques, devices can be manufactured using micro-machined or Micro-ElectroMechanical System (MEMS) based techniques. One common technique for manufacturing a pressure sensor is to attach a MEMS device onto a substrate, such as a ceramic or printed circuit board (PCB) substrate, along with etching and bonding techniques to fabricate very small, inexpensive devices.

Further, the method described with reference to Fig. 14 can be computer implement. For example the method can be executed by a processor or a computer. Thus the method enables for compensating temperature dependencies of a piezo resistive element integrated in a pressure sensor. Additionally, a computer program can comprise instructions which, when the program is executed by a computer, cause the computer to carry out the steps of the method. Additionally, a computer-readable medium can comprise instructions which, when executed by a computer, cause the computer to carry out the method.

**REFERENCE NUMERALS**

| **Reference Numeral** | **Description** |
|---|---|
| 1,2,3,4 | terminals |
| 10 | Pressure sensor |
| 100 | sensor die |
| 120 | pressure circuitry |
| 122, R1, R2, R3, R4 | piezo resistive element |
| 123 1, 123 2 | switch |
| 124 | diaphragm |
| 126 | silicon wafer wall |
| 127 | wafer sealing |
| 128 | backside glass wafer |
| 130 | pad |
| 140 | temperature circuitry |
| 160 | built-in heating element |
| 200 | memory |
| 220 | compensation value storage unit |
| 240 | program storage unit |
| 300 | processor |

## Claims

1. Pressure sensor (10) for compensating temperature dependencies of a piezo resistive element (122), the pressure sensor (10) comprising:
a sensor die (100) connected to a processor (300), the sensor die (100) adapted to receive an input signal from the processor (300) and to output an output signal to the processor (300), the sensor die (100) comprising:
a pressure circuitry (120) comprising the piezo resistive element (122), the pressure circuitry (120) adapted to measure a pressure (P1) applied to the sensor die (100) and to output a pressure signal indicative of the applied pressure (P1);
a temperature circuitry (140) integrated with the pressure circuitry (120) adapted to measure a temperature (T1) of the piezo resistive element (122) and to output a temperature signal indicative of the temperature of the piezo resistive element (122); and
a built-in heating element (160) integrated with the pressure circuitry (120) adapted to heat the piezo resistive element (122) based on a received heating signal;
a memory (200) storing:
a temperature coefficient, TC, for compensating temperature effects of the piezo resistive element (122); and
a program, when executed by the processor (300), causes the processor (300) to perform the steps of:
receiving (S52), from the temperature circuitry (140), a first temperature signal for determining a first temperature (T1) of the pressure circuitry (120);
receiving (S53), from the sensor die (100), a first output signal (V2, V3) for determining a first resistive value (R1_{T=T1}) of the piezo resistive element (122) at the first temperature (T1);
transmitting (S55), to the built-in heating element (140), after receiving the first output signal, a heating signal for heating the pressure circuitry (120) to a second temperature (T2);
receiving (S56), from the sensor die (100) after termination of the heating,
a second output signal for determining a second resistive value (R1_{T=T2}) of the piezo resistive element (122) at the second temperature (T2); and
storing (S58), in the memory (200), an updated TC for the piezo resistive element (122) calculated based on the first temperature (T1), the first resistive value (R1_{T=T1}), the second temperature (T2), and the second resistive value (R1_{T=T2}).

2. Pressure sensor (10) according to claim 1, wherein the second temperature is determined based on at least one of the heating signal and a second temperature signal received from the temperature circuitry (140).

3. Pressure sensor (10) according to any of the preceding claims, wherein the built-in heating element (160) comprises a resistive network integrated with the piezo resistive element (122) on the silicon die

4. Pressure sensor (10) according to claim 3, wherein the resistive network comprises the piezo resistive element (122) of the pressure circuitry (120).

5. Pressure sensor (10) according to claim 4, wherein the pressure circuitry (120) comprises a resistive bridge with four resistors (R1, R2, R3, R4) and the same four resistors (R1, R2, R3, R4) are connected in the resistive network in parallel to form the built-in heating element (160).

6. Pressure sensor (10) according to any of the preceding claims, wherein the built-in heating element (160) comprises an inductive heating coil integrated with the piezo resistive element (122) on the silicon die,
optionally wherein a principal heating coil for coupling to the inductive heating coil is integrated on a mounting platform for mounting the pressure sensor (10),
optionally wherein a mounting platform is formed by at least one of a printed circuit board and a ceramic substrate,
optionally wherein at least one of the memory (200) and the processor (300) are mounted on a mounting platform.

7. Pressure sensor (10) according to any of the preceding claims, wherein the temperature circuitry (140) comprises the piezo resistive element (122) of the pressure circuitry and the temperature of the pressure circuitry (120) is determined based on a measured resistance (Req(T)) across the piezo resistive element (122) and the stored TC.

8. Pressure sensor (10) according to claim 7, wherein the pressure circuitry (122) comprises a resistive bridge with four piezo resistive elements (R1, R2, R3, R4) and the temperature of the pressure circuitry (120) is determined based on a measured resistance (Req(T)) across the resistive bridge and the stored TC.

9. Pressure sensor (10) according to any of claims 7 and 8, wherein the program further causes the processor (300) to perform the steps of:
receiving, from the temperature circuitry (140) after termination of the heating, an initial temperature signal;
receiving, from the temperature circuitry (140) after receiving the initial temperature signal, a subsequent temperature signal; and
determining, based on the initial temperature signal and the subsequent temperature signal, the second temperature.

10. Pressure sensor (10) according to any of the preceding claims, wherein the temperature circuitry (140) comprises a temperature sensor diode for outputting the temperature signal.

11. Pressure sensor (10) according to any of the preceding claims, wherein the sensor die (100) further comprises a second pressure circuitry (120') comprising a second piezo resistive element, the second pressure circuitry (120') adapted to measure a second pressure applied to the sensor die (100) and to output a second pressure signal indicative of the applied second pressure.

12. Pressure sensor (10) according to claim 11, wherein the built-in heating element (160) comprises a resistive network integrated with the second piezo resistive element on the silicon die (100), preferably wherein the resistive network comprises the second piezo resistive element of the second pressure circuitry (120'), preferably wherein four resistors of a second resistive bridge forming the second pressure circuitry are connected in parallel to form the built-in heating.

13. Pressure sensor according to any of the preceding claims, wherein the pressure circuitry (120) comprises a Wheatstone bridge, wherein a first resistance value (R1, R4) of a first pair of opposing arms of the Wheatstone bridge increases with pressure and a second resistance value (R2, R3) of a second pair of opposing arms of the Wheatstone bridge is inverted relative to the first resistance value.

14. Pressure sensor according to claim 13 further comprising a switch (123_1, 123_2), wherein the switch (123_1, 123_2) is configured to switch between a pressure sensing mode where abutting arms of the Wheatstone bridge are excited with the same voltage and a diagnosis mode where abutting arms are excited with inverted voltage values.

15. Method carried out by a processor (300) for compensating temperature dependencies of a piezo resistive element (122) integrated in a pressure sensor (10) according to any of the preceding claims, the method comprising the steps of:
receiving, from the temperature circuitry (140), a first temperature signal for determining a first temperature (T1) of the pressure circuitry (120);
receiving, from the sensor die (100), a first output signal (V2, V3) for determining a first resistive value (P1_{T=T1}) of the piezo resistive element at the first temperature (T1);
transmitting, to the built-in heating element (160), after receiving the first output signal, a heating signal for heating the pressure circuitry (120) to a second temperature (T2);
receiving, from the sensor die (100) after termination of the heating, a second output signal for determining a second resistive value (P1_{T=T2}) of the piezo resistive element (120) at the second temperature (T2); and
storing, in the memory (200), an updated TC for the piezo resistive element (122) calculated based on the first temperature (T1), the first resistive value (R1_{T=T1}), the second temperature (T2), and the second resistive value (R1_{T=T2}).
